# EUROPEAN PATENT APPLICATION

(11) **EP 4 239 341 A1**
(43) Date of publication of application: **06.09.2023**
(21) Application number: 21885664.9
(22) Date of filing: 26.08.2021
(51) Int. Cl.: G01N 35/10

(54) **AUTOMATIC ANALYSIS DEVICE**

(30) Priority: 30.10.2020 JP 2020182650
(71) Applicant: HITACHI HIGH-TECH CORPORATION, Tokyo 105-6409 (JP)
(72) Inventor: NODA Kazuhiro, Tokyo 100-8280 (JP); HAMASAKI Koshin, Tokyo 105-6409 (JP); KUWABARA Masayuki, Tokyo 105-6409 (JP); TAKADA Eiichiro, Tokyo 105-6409 (JP)
(74) Representative: Mewburn Ellis LLP
(86) International application number: PCT/JP2021/031269
(87) International publication number: WO 2022/091545

(57) **Abstract**

The purpose of the present invention is to provide an automatic analysis device capable of ensuring accuracy in a wide range of a pipetting amount without changing the rotation/vertical speed of a sampling arm and the aspiration speed of a pump. The automatic analysis device according to the present invention, which is an automatic analysis device for analyzing a target substance included in a sample, is characterized by comprising: a detection unit that analyzes the sample; and a probe that pipettes a liquid, wherein the probe changes the number of aspiration by which the liquid is aspirated into the probe according to the pipetting amount by which the probe pipettes the liquid (see FIG. 8).

## Description

### Technical Field

The present invention relates to an automatic analysis device including a pipetting unit that aspirates and discharges a liquid such as a reagent or a sample used for analysis.

### Background Art

An automatic analysis device such as a biochemical analysis device or an immunoassay device includes a sample/reagent holding unit that holds a sample such as a biological sample and an analysis reagent, a pipetting unit that aspirates a specified amount of the sample and the reagent and discharges the sample and the reagent into a reaction vessel, an incubator that controls the temperature of a mixed liquid of the sample and the reagent to react, and a detection unit that detects a reacted solution.

The pipetting unit includes a cylindrical or tapered probe to be inserted into a liquid, a syringe serving as a pressure source for aspirating and discharging the liquid, and a flow path connecting the probe and the syringe. The probe is inserted into a sample container or a reagent container, a specified amount of liquid is aspirated by operating the syringe, the probe is moved to the reaction vessel, and the liquid is discharged to pipette the specified amount of liquid. At the time of pipetting, a disposable tip may be attached to a distal end of the probe in order to prevent a component from being carried over to the next inspection.

In a case of some analysis items, a plurality of reagents to be used for analysis, or both the reagent and the sample may be simultaneously held in the probe or the tip and pipetted. In a case where a plurality of liquids are simultaneously held in the probe or the tip, a plurality of types of liquids are continuously aspirated, and all the liquids are aspirated and then discharged to the reaction vessel to pipette the liquids. By simultaneously pipetting the plurality of types of liquids, it is possible to achieve a reduction in amount of cleaning water used, a reduction in number of pipetting tips used, and a reduction in time required for pipetting.

At the time of pipetting, the number of reagents to be used and the pipetting amount vary depending on the analysis item. In order to cope with a wide range of analysis items, it is necessary to perform pipetting while maintaining accuracy in a wide range of a pipetting amount. In particular, in a case where the pipetting amount is large, a large amount of time is required for the operation of aspiration and discharging the liquid. Even in a case where the pipetting amount is large, it is possible to maintain the throughput of the analysis device by performing pipetting while maintaining accuracy in one cycle of pipetting operation.

The technology described in PTL 1 describes a method of performing pipetting while maintaining accuracy in a wide range of a pipetting amount. In PTL 1, in a case where the pipetting amount is large, the rotation/vertical speed of a sampling arm used for pipetting and the air aspiration speed by a pump are increased to ensure a time required for aspirating and discharging a liquid.

In the technology described in PTL 2, a lowering operation time of a sampling arm is changed according to a pipetting amount, so that the sampling arm is lowered by a low-speed operation in a case where the pipetting amount is small to improve liquid level detection accuracy, and the sampling arm is lowered by a high-speed operation in a case where the pipetting amount is large to ensure the time required for aspirating and discharging a liquid.

### Citation List

### Patent Literature

PTL 1: JP 4783170 B2
PTL 2: JP 2013-134237 A

### Summary of Invention

### Technical Problem

In the structure described in PTL 1, in a case where the pipetting amount is large, the sampling arm used for pipetting or the air aspiration speed of the pump is increased to secure a time required for pipetting. However, the rotation/vertical speed of the sampling arm and the aspiration speed of the pump also have upper limits, and even in a case where the upper limit speeds are set, there is a possibility that a sufficient time for aspirating and discharging a liquid is not ensured.

Also in the configuration described in PTL 2 in which the lowering operation time of the sampling arm is changed according to the pipetting amount, there is an upper limit on the lowering speed of the sampling arm similarly to PTL 1, and even in a case where the lowering speed of the sampling arm is set to the upper limit speed, there is a possibility that a sufficient time for aspirating and discharging a liquid is not ensured.

The present invention has been made in view of the above problems, and the purpose of the present invention is to provide an automatic analysis device capable of ensuring accuracy in a wide range of a pipetting amount without changing the rotation/vertical speed of a sampling arm and the aspiration speed of a pump.

### Solution to Problem

An automatic analysis device according to the present invention, which is an automatic analysis device for analyzing a target substance included in a sample, is characterized by comprising: a detection unit that analyzes the sample; and a probe that pipettes a liquid, in which the liquid is the sample or a reagent used to analyze the sample, and the probe changes the number of aspiration by which the liquid is aspirated into the probe according to a pipetting amount by which the probe pipettes the liquid.

### Advantageous Effects of Invention

With the automatic analysis device of the present invention, it is possible to provide the automatic analysis device capable of ensuring a time required for an operation of aspirating and discharging a liquid and ensuring accuracy in a wide range of a pipetting amount even in a case where an aspirating/discharging amount of the liquid is large. Problems, configurations, and effects other than those described above will become apparent by the following description of embodiments.

### Brief Description of Drawings

[FIG. 1] FIG. 1 is a schematic configuration diagram of an automatic analysis device 1 according to a first embodiment.
[FIG. 2] FIG. 2 is a schematic configuration diagram of a pipetting mechanism 111.
[FIG. 3] FIG. 3 illustrates a state of flow in a probe 201 and a tip 113 in an aspiration/discharge operation when two types of reagents and one type of sample are simultaneously pipetted.
[FIG. 4] FIG. 4 is a flowchart illustrating an operation procedure of the pipetting mechanism 111 when two types of reagents and one type of sample are simultaneously pipetted.
[FIG. 5] FIG. 5 is a time chart illustrating timings of operations of the pipetting mechanism 111 and a pipetting mechanism 112 and timings of operations of a reagent disk 102, a sample disk 104, and an incubator 106 that are related to the pipetting mechanism 111 and the pipetting mechanism 112 in the first embodiment.
[FIG. 6] FIG. 6 illustrates a state of flow in the probe 201 and the tip 113 in an aspiration/discharge operation when one type of reagent and one type of sample are simultaneously pipetted.
[FIG. 7] FIG. 7 illustrates a state of flow in the probe 201 and the tip 113 in an aspiration/discharge operation in a case where access to a reagent is made twice when one reagent and one sample are simultaneously pipetted.
[FIG. 8] FIG. 8 is a flowchart illustrating an operation procedure of the pipetting mechanism 111 when one type of reagent and one type of sample are simultaneously pipetted.
[FIG. 9] FIG. 9 is a flowchart in which an algorithm for changing the number of times of access is generalized.
[FIG. 10] FIG. 10 is a schematic configuration diagram of a pipetting mechanism included in an automatic analysis device 1 according to a second embodiment.
[FIG. 11] FIG. 11 illustrates a state of flow in a probe 1001 in an aspiration/discharge operation when two types of reagents and one type of sample are simultaneously pipetted in the second embodiment.
[FIG. 12] FIG. 12 illustrates a state of flow in the probe 1001 in an aspiration/discharge operation when one type of reagent and one type of sample are simultaneously pipetted.
[FIG. 13] FIG. 13 illustrates a state of flow in the probe 1001 in an aspiration/discharge operation in a case where access to a reagent is performed twice when one reagent and one sample are simultaneously pipetted.
[FIG. 14] FIG. 14 is a flowchart illustrating an operation procedure of a pipetting mechanism 111 when one type of reagent and one type of sample are simultaneously pipetted.

### Description of Embodiments

### <First Embodiment>

In a first embodiment of the present invention, a case in which two pipetting mechanisms are provided in an automatic analysis device, a reagent and a sample are aspirated into a tip by one pipetting mechanism, a reagent and a sample are aspirated into a probe by the other pipetting mechanism, and each of the reagent and the sample is discharged to a reaction vessel will be described. In the first embodiment, a case where the pipetting mechanism continuously aspirates two types of reagents and one type of sample at the maximum and simultaneously discharges the liquids to the reaction vessel is considered. In the present specification, "continuously aspirating" means aspirating a reagent or sample before discharging an aspirated liquid after aspirating a reagent or sample.

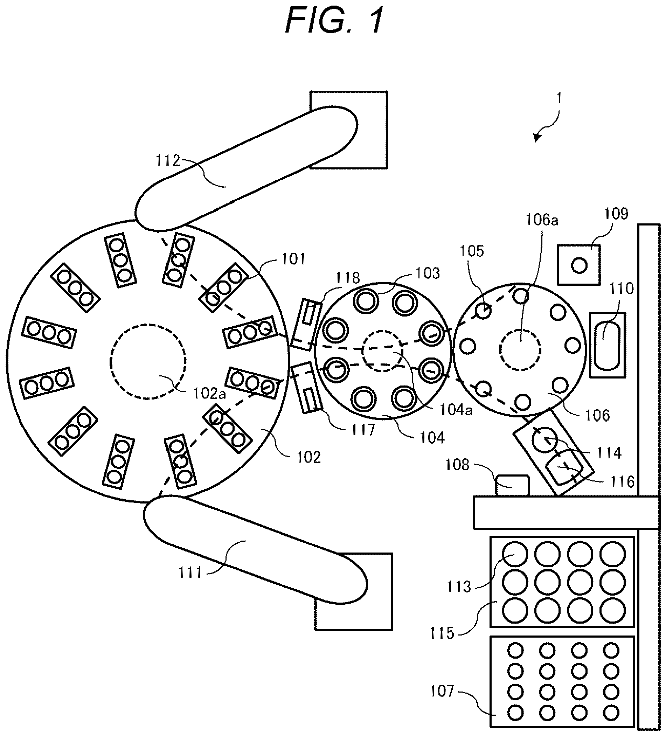

FIG. 1 is a schematic configuration diagram of an automatic analysis device 1 according to the first embodiment. A reagent bottle 101 containing a reagent to be used for analysis is held in a reagent disk 102, and a sample container 103 containing a sample is held in a sample disk 104. A reaction vessel 105 for reacting the sample with the reagent is held in an incubator 106 whose temperature is controlled to a constant temperature.

The reaction vessel 105 is mounted on a device in a state of being placed on a reaction vessel tray 107, and is conveyed to the incubator 106 by using a gripper 108. A component of a solution reacted in the reaction vessel 105 is detected and analyzed by a detection unit 109. The used reaction vessel 105 after the detection is completed is discarded to a reaction vessel disposal port 110 by using the gripper 108.

The automatic analysis device 1 includes two independent pipetting mechanisms. The pipetting mechanisms are a pipetting mechanism 111 and a pipetting mechanism 112, respectively. The reagent disk 102, the sample disk 104, and the incubator 106 include rotationally driven movement mechanisms 102a, 104a, and 106a (each integrated with the disk), respectively. The reagent disk 102, the sample disk 104, and the incubator 106 are moved to positions where the pipetting mechanism 111 and the pipetting mechanism 112 can access liquids by the movement mechanism. The term "access" as used herein means not only to approach the liquid but also to aspirate the liquid. The same applies to the following.

The pipetting mechanism 111 uses a disposable tip 113 at the time of pipetting in order to prevent the component of the sample or the reagent from being carried over to the next analysis. The pipetting mechanism 111 aspirates a necessary sample and reagent by using the tip 113 installed in a tip buffer 114. The tip 113 is mounted on the device in a state of being placed on a tip tray 115, and is conveyed from the tip tray 115 to the tip buffer 114 by using the gripper 108. The used tip 113 after pipetting is discarded to a tip disposal port 116. The pipetting mechanism 112 aspirates a necessary sample and reagent by using the probe provided with the pipetting mechanism without using the tip 113.

In FIG. 1, the pipetting mechanism 111 is configured to perform pipetting with the tip 113, and the pipetting mechanism 112 is configured to perform pipetting with the probe, but both the pipetting mechanisms 111 and 112 may be configured to perform pipetting with the tip. Both the pipetting mechanisms 111 and 112 may be configured to perform pipetting with the probe. The pipetting mechanism 111 and the pipetting mechanism 112 are provided with a cleaning tank 117 and a cleaning tank 118, respectively, so that the pipetting mechanisms can be cleaned. By cleaning, it is possible to prevent the component from being carried over when pipetting different liquids.

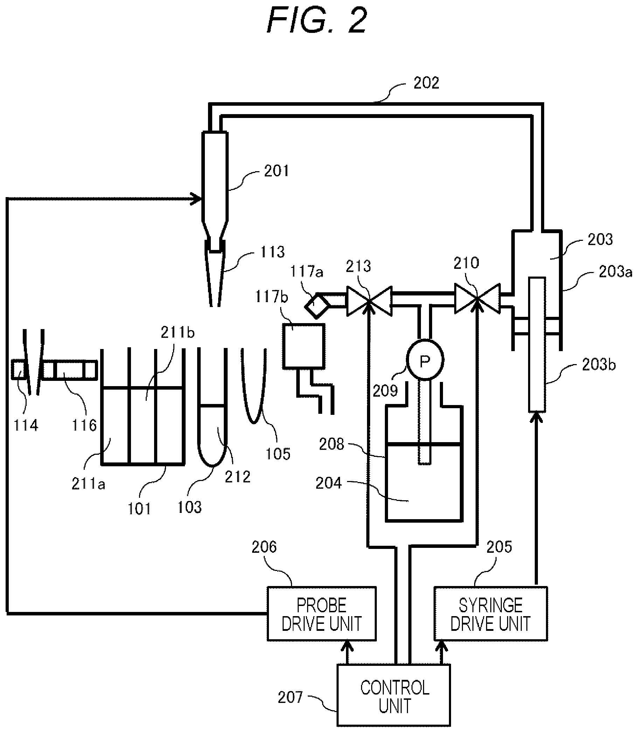

FIG. 2 is a schematic configuration diagram of the pipetting mechanism 111. The pipetting mechanism 112 has a similar configuration. The tip 113 is provided at a distal end of a probe 201 of the pipetting mechanism 111. The probe 201 is coupled to a syringe 203 for aspirating and discharging a liquid via a tube 202. The syringe 203 can aspirate and discharge a liquid by a plunger 203b moving with respect to a cylinder 203a. The inside of a flow path of the pipetting mechanism 111 is filled with cleaning water 204, and plays a role of improving efficiency of pressure propagation and a role of cleaning contaminants. The probe 201 changes the number of aspiration by which the liquid is aspirated into the probe according to a pipetting amount of the liquid (the sample or reagent).

The syringe 203 performs an aspiration/discharge operation by a syringe drive unit 205, and the probe 201 performs a vertical rotation operation by a probe drive unit 206 (movement mechanism). A control unit 207 controls the amounts and timings of these operations. For example, each of the movement mechanisms 102a, 104a, and 106a and the probe drive unit 206 moves a placement unit (the reagent disk or sample disk) in which the reagent container or sample container is placed or the probe to a pipetting position according to the liquid pipetted by the probe 201. The cleaning water 204 put in a cleaning water tank 208 is fed into the flow path through a pump 209. When the cleaning water 204 is fed to the probe 201, an electromagnetic valve 210 is opened and closed to start or stop the feeding.

The tip 113 attached to a distal end of the probe 201 in the tip buffer 114 accesses two types of reagents 211a and 211b contained in the reagent bottle 101, the sample 212 contained in the sample container 103, the reaction vessel 105, and the cleaning tank 117, and then is discarded to the tip disposal port 116. The cleaning tank 117 includes a cleaning nozzle 117a and a drain cup 117b, and an outer wall of the tip 113 can be cleaned by the cleaning nozzle 117a. As the cleaning water is discharged from the probe 201 to the drain cup 117b in a state where the tip is removed, an inner wall of the probe can be cleaned. Start and stop of the feeding of the cleaning water to the cleaning nozzle 117a are performed by opening and closing an electromagnetic valve 213. The electromagnetic valve 213 is controlled by the control unit 207.

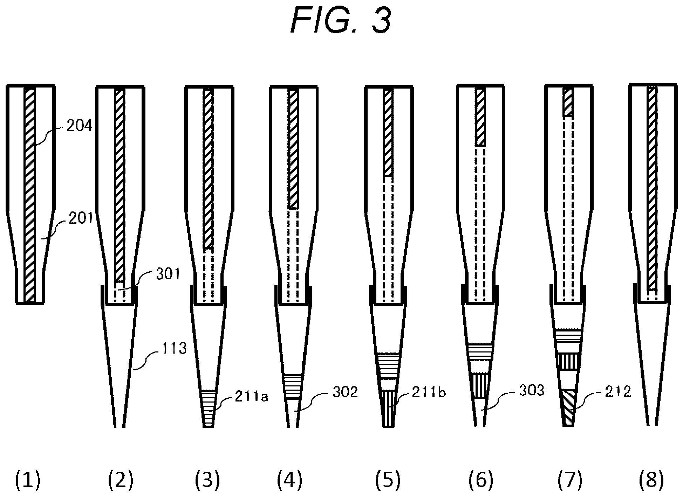

FIG. 3 illustrates a state of flow in the probe 201 and the tip 113 in an aspiration/discharge operation when two types of reagents and one type of sample are simultaneously pipetted. The maximum number of types of liquids that can be pipetted is three in the first embodiment. First, the inside of the reagent probe 201 is filled with the cleaning water 204 (FIG. 3(1)). Subsequently, the syringe 203 is driven to aspirate segmented air 301 into the probe, and then access to the tip buffer 114 is made to attach the tip 113 (FIG. 3(2)).

The probe 201 is driven to immerse the tip 113 in the reagent 211a. After the immersion, the syringe 203 is driven to aspirate the reagent 211a into the tip 113 (FIG. 3(3)). At the time of aspiration, the reagent 211a is attached to the outer wall of the tip 113. By accessing the cleaning tank 117 and discharging the cleaning water 204 from the cleaning nozzle 117a to the outer wall of the tip 113, the reagent 211a attached to the outer wall of the tip 113 is cleaned away. Before or after the cleaning, the syringe 203 is driven to aspirate segmented air 302 into the probe, thereby preventing dripping of the reagent 211a (FIG. 3(4)).

Subsequently, the probe 201 is driven to immerse the tip 113 in the reagent 211b. After the immersion, the syringe 203 is driven to aspirate the reagent 211b into the tip 113 (FIG. 3(5)). At the time of aspiration, the reagent 211b is attached to the outer wall of the tip 113. By accessing the cleaning tank 117 and discharging the cleaning water 204 from the cleaning nozzle 117a to the outer wall of the tip 113, the reagent 211b attached to the outer wall of the tip 113 is cleaned away. Before or after the cleaning, the syringe 203 is driven to aspirate segmented air 303 into the probe, thereby preventing dripping of the reagent 211b (FIG. 3(6)).

Finally, the probe 201 is driven to immerse the tip 113 in the sample 212. After the immersion, the syringe 203 is driven to aspirate the sample 212 into the tip 113 (FIG. 3(7)). Since all the liquids to be pipetted have been aspirated by the processes so far, the probe 201 is driven to access the reaction vessel 105 and discharge all the liquids (FIG. 3(8)). As a result, it is possible to pipette three types of liquids of the reagent 211a, the reagent 211b, and the sample 212 with one tip 113. After the liquids are discharged to the reaction vessel 105, the liquid in the reaction vessel 105 may be aspirated and discharged into the tip to be stirred.

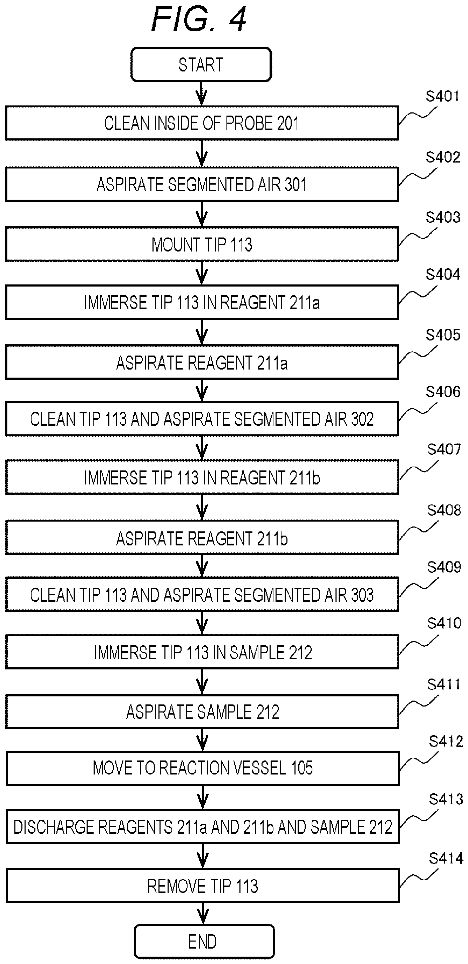

FIG. 4 is a flowchart illustrating an operation procedure of the pipetting mechanism 111 when two types of reagents and one type of sample are simultaneously pipetted. First, the cleaning water 204 is caused to flow into the probe 201 to clean the inside of the probe 201 (S401). The segmented air 301 is aspirated into the probe 201 (S402), and the tip 113 is mounted on the distal end of the probe 201 (S403).

Next, access to the reagent 211a is made in the following procedure. As the probe 201 is driven, the tip 113 is immersed in the reagent 211a (S404), and the reagent 211a is aspirated into the tip 113 (S405). After accessing the reagent 211a, access to the cleaning tank 117 is made to clean the outer wall of the tip 113, and cleaning of the tip 113 and aspiration of the segmented air 302 are performed (S406).

Next, access to the reagent 211b is made in the following procedure. As the probe 201 is driven, the tip 113 is immersed in the reagent 211b (S407), and the reagent 211b is aspirated into the tip 113 (S408). After accessing the reagent 211b, access to the cleaning tank 117 is made to clean the outer wall of the tip 113, and cleaning of the tip 113 and aspiration of the segmented air 303 are performed (S409).

Subsequently, access to the sample 212 is made in the following procedure. As the probe 201 is driven, the tip 113 is immersed in the sample 212 (S410), and the sample 212 is aspirated into the tip 113 (S411).

Finally, access to the incubator 106 is made to discharge the aspirated liquid. The probe 201 is moved to the reaction vessel 105 (S412), and the reagent 211a, the reagent 211b, and the sample 212 are discharged into the reaction vessel 105 (S413). The probe is moved to the tip disposal port 116, and the tip 113 is removed (S414). Immediately after the discharge to the reaction vessel 105 (S413), the liquid in the reaction vessel 105 may be aspirated and discharged into the tip to be stirred.

As described above, the probe 201 pipettes a first liquid and a second liquid. The probe 201 aspirates the first liquid, and then further aspirates the second liquid before discharging the first liquid, so that the first liquid and the second liquid can be simultaneously held inside the probe. Here, the first liquid and the second liquid are reagents or samples accommodated in one container or reagents or samples accommodated in different containers.

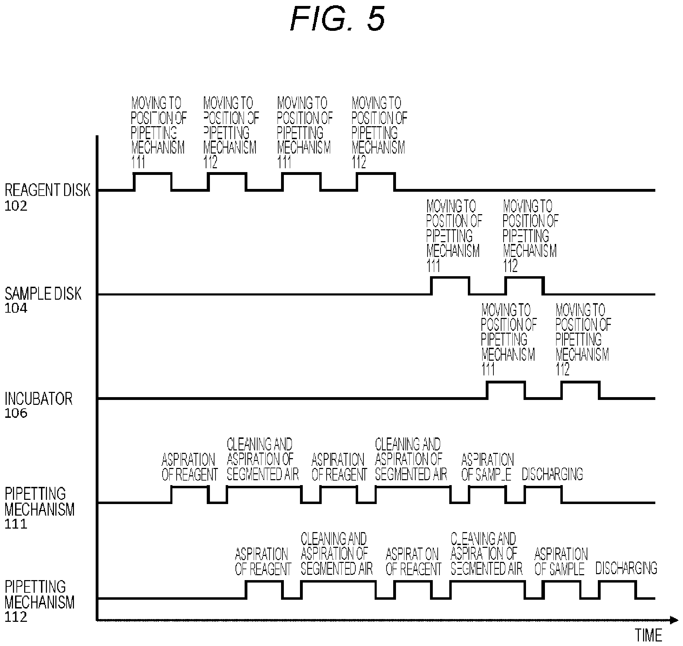

FIG. 5 is a time chart illustrating timings of operations of the pipetting mechanism 111 and a pipetting mechanism 112 and timings of operations of a reagent disk 102, a sample disk 104, and an incubator 106 that are related to the pipetting mechanism 111 and the pipetting mechanism 112 in the first embodiment.

In the first embodiment, both the pipetting mechanism 111 and the pipetting mechanism 112 aspirate the reagent in the reagent disk 102. The pipetting mechanism 111 and the pipetting mechanism 112 alternately access the reagent disk 102 to aspirate up to two types of reagents. Before the pipetting mechanisms 111 and 112 aspirate the reagent, the reagent disk 102 is moved in such a way that each pipetting mechanism can access the reagent to be aspirated. After the pipetting mechanism 111 aspirates the reagent, cleaning is performed until the next reagent is aspirated. Since the pipetting mechanism 112 aspirates the reagent during the cleaning, a waiting time of the reagent disk can be reduced and analysis can be efficiently performed.

Similarly, the pipetting mechanism 111 and the pipetting mechanism 112 alternately access the sample disk 104 to aspirate the sample. Before the pipetting mechanisms 111 and 112 aspirate the sample, the sample disk 104 is moved in such a way that each pipetting mechanism can access the sample to be aspirated. The pipetting mechanism 111 and the pipetting mechanism 112 alternately access the incubator 106 and discharge the reagent and the sample to the reaction vessel. The incubator 106 is moved in such a way that each pipetting mechanism can access the reaction vessel to which the reagent and the sample are discharged before each of the pipetting mechanisms 111 and 112 discharges the reagent and the sample.

FIGS. 3 and 4 illustrate an aspiration/discharge operation of the pipetting mechanism 111 when two types of reagents and one type of sample, which correspond to the maximum number of types of liquids, are simultaneously pipetted. On the other hand, one type of reagent may be used for some analysis items.

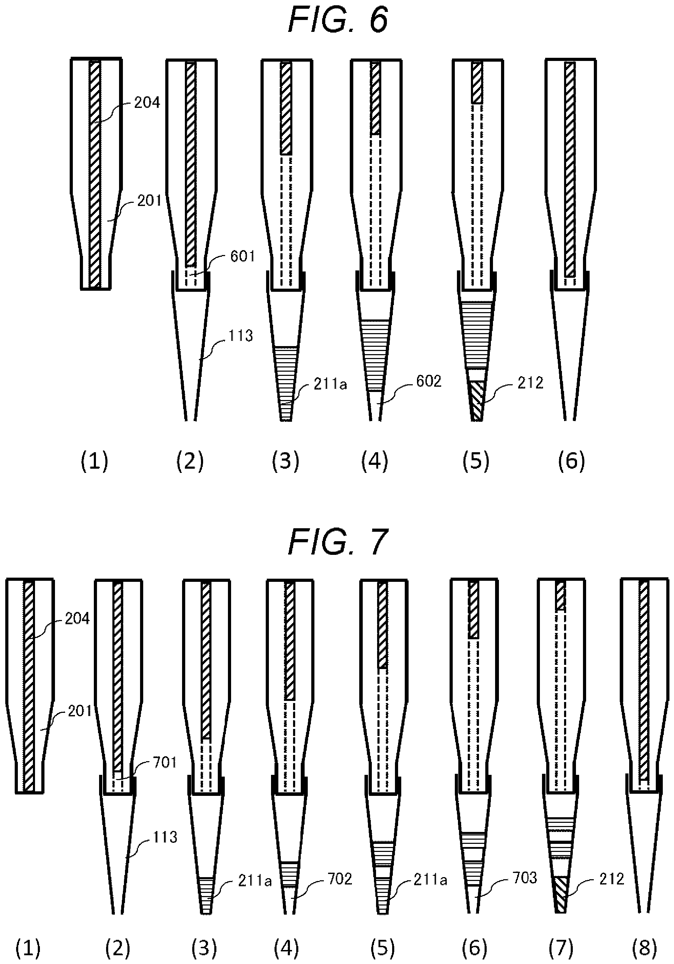

FIG. 6 illustrates a state of flow in the probe 201 and the tip 113 in an aspiration/discharge operation when one type of reagent and one type of sample are simultaneously pipetted. First, the inside of the probe 201 is filled with the cleaning water 204 (FIG. 6(1)). Subsequently, the syringe 203 is driven to aspirate segmented air 601 into the probe, and then access to the tip buffer 114 is made to attach the tip 113 (FIG. 6(2)).

The probe 201 is driven to immerse the tip 113 in the reagent 211a. After the immersion, the syringe 203 is driven to aspirate the reagent 211a into the tip 113 (FIG. 6(3)). Subsequently, by accessing the cleaning tank 117 and discharging the cleaning water 204 from the cleaning nozzle 117a to the outer wall of the tip 113, the reagent 211a attached to the outer wall of the tip 113 is cleaned away. Before or after the cleaning, the syringe 203 is driven to aspirate segmented air 602 into the probe, thereby preventing dripping of the reagent 211a (FIG. 6(4)).

Since the reagent 211b is not used, the reagent 211b is not accessed and the sample 212 is accessed. The probe 201 is driven to immerse the tip 113 in the sample 212. After the immersion, the syringe 203 is driven to aspirate the sample 212 into the tip 113 (FIG. 6(5)). Since all the liquids to be pipetted have been aspirated by the processes so far, the probe 201 is driven to access the reaction vessel 105 and discharge all the liquids (FIG. 6(6)). As a result, it is possible to pipette the reagent 211a and the sample 212 with one tip 113. After the liquids are discharged to the reaction vessel 105, the liquid in the reaction vessel 105 may be aspirated and discharged into the tip to be stirred.

In FIG. 6, the reagent 211a is aspirated using any one of two timings at which the reagent can be aspirated in FIG. 5. In a case where a set aspiration amount of the reagent 211a is large, it takes time to aspirate the reagent 211a. In the first embodiment, the pipetting mechanism 111 can access the reagent disk 102 up to two times. That is, access to the reagent 211a can be made twice, and the set aspiration amount of reagent 211a can be dividedly aspirated in twice. Therefore, in a case where the set aspiration amount is large, it is possible to improve pipetting accuracy by performing the access in twice to secure an aspiration time.

FIG. 7 illustrates a state of flow in the probe 201 and the tip 113 in an aspiration/discharge operation in a case where access to a reagent is made twice when one reagent and one sample are simultaneously pipetted. As illustrated in FIG. 5, each pipetting mechanism can access the reagent twice. Therefore, it is also possible to aspirate the same reagent in twice. FIG. 7 illustrates an operation sequence example.

First, the inside of the probe 201 is filled with the cleaning water 204 (FIG. 7(1)). Subsequently, the syringe 203 is driven to aspirate the segmented air 701 into the probe, and then access to the tip buffer 114 is made to attach the tip 113 (FIG. 7(2)).

The probe 201 is driven to immerse the tip 113 in the reagent 211a. After the immersion, the syringe 203 is driven to aspirate the reagent 211a into the tip 113 (FIG. 7(3)). Subsequently, access to the cleaning tank 117 is made to clean the outer wall of the tip 113. Then, the syringe 203 is driven to aspirate segmented air 702 into the probe, thereby preventing dripping of the reagent 211a (FIG. 7(4)). Since the liquid attached to the outer wall of the tip 113 at the time of aspiration is the reagent 211a and the liquid to be accessed next is also the reagent 211a, cleaning in the cleaning tank 117 does not have to be performed at this time.

Subsequently, the reagent 211a is accessed again. The probe 201 is driven to immerse the tip 113 in the reagent 211a. After the immersion, the syringe 203 is driven to aspirate the reagent 211a into the tip 113 (FIG. 7(5)). Subsequently, access to the cleaning tank 117 is made to clean the outer wall of the tip 113. Then, the syringe 203 is driven to aspirate segmented air 703 into the probe, thereby preventing dripping of the reagent 211a (FIG. 7(6)).

Finally, the probe 201 is driven to immerse the tip 113 in the sample 212. After the immersion, the syringe 203 is driven to aspirate the sample 212 into the tip 113 (FIG. 7(7)). Since all the liquids to be pipetted have been aspirated by the processes so far, the probe 201 is driven to access the reaction vessel 105 and discharge all the liquids (FIG. 7(8)). As a result, it is possible to pipette the reagent 211a and the sample 212 with one tip 113. After the liquids are discharged to the reaction vessel 105, the liquid in the reaction vessel 105 may be aspirated and discharged into the tip to be stirred.

In a case where the pipetting amount is equal to or greater than a threshold, the probe 201 preferably increases the number of aspiration to be larger than that in a case where the pipetting amount is less than the threshold. In the first embodiment, when one type of reagent and one type of sample are simultaneously pipetted, the same reagent is accessed twice and dividedly aspirated in a case where the set pipetting amount is equal to or greater than the threshold. On the other hand, in a case where the set aspiration amount is equal to or less than the threshold, the set amount of liquid is aspirated by one access. Hereinafter, the operation procedure will be described.

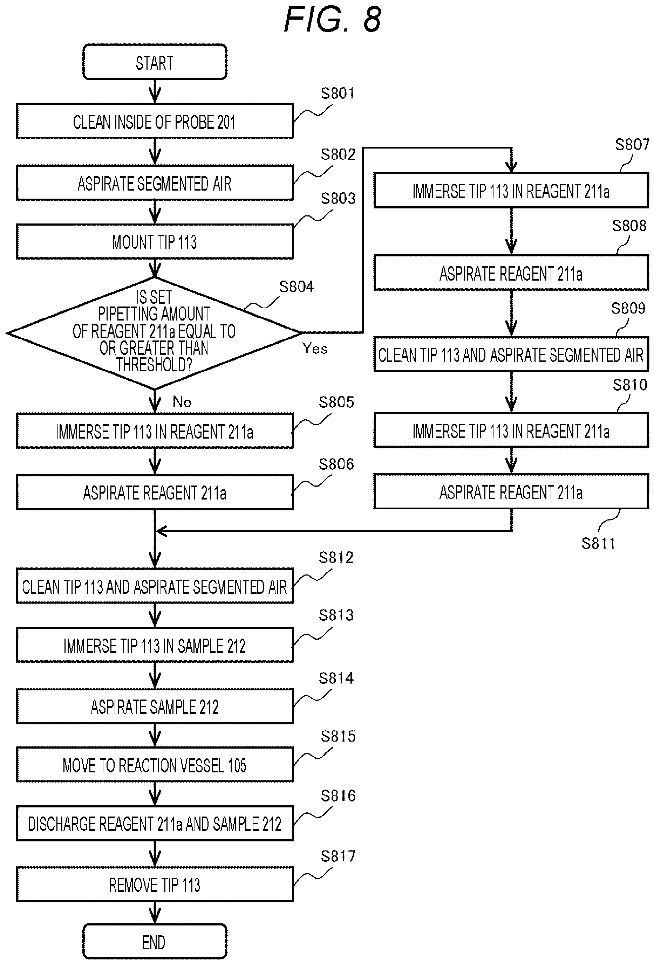

FIG. 8 is a flowchart illustrating an operation procedure of the pipetting mechanism 111 when one type of reagent and one type of sample are simultaneously pipetted. First, the cleaning water 204 is caused to flow into the probe 201 to clean the inside of the probe 201 (S801). The segmented air is aspirated into the probe 201 (S802), and the tip 113 is mounted on the distal end of the probe 201 (S803).

Next, the number of times of access to the reagent 211a is changed according to whether or not the set pipetting amount of the reagent 211a is equal to or greater than the threshold (S804). In the present invention, the threshold is set to 100 microliters. The threshold is set according to an inner volume of the tip, the maximum pipetting amount, the minimum pipetting amount, and the like. For example, 10 times the minimum pipetting amount, 25% of the inner volume of the tip 113, 50% of the maximum pipetting amount, or the like can be set as the threshold.

In a case where the set pipetting amount of the reagent 211a is less than the threshold, the number of times of access to the reagent 211a is set to one time. As the probe 201 is driven, the tip 113 is immersed in the reagent 211a (S805), and the reagent 211a is aspirated into the tip 113 (S806).

In a case where the set pipetting amount of the reagent 211a is equal to or greater than the threshold, the number of times of access to the reagent 211a is set to two times. The tip 113 is immersed in the reagent 211a (S807), and the reagent 211a is aspirated into the tip 113 (S808). Thereafter, access to the cleaning tank 117 is made, and cleaning of the tip 113 and aspiration of the segmented air are performed (S809). The tip 113 is immersed in the reagent 211a again (S810), and the reagent 211a is aspirated into the tip 113 (S811).

After completion of the aspiration of the reagent 211a, access to the cleaning tank 117 is made, and cleaning of the tip 113 and aspiration of the segmented air are performed (S812), and the sample 212 is accessed. As the probe 201 is driven, the tip 113 is immersed in the sample 212 (S813), and the sample 212 is aspirated into the tip 113 (S814).

Finally, access to the incubator 106 is made to discharge the aspirated liquid. The probe 201 is moved to the reaction vessel 105 (S815), and the reagent 211a and the sample 212 are discharged into the reaction vessel 105 (S816). The probe is moved to the tip disposal port 116, and the tip 113 is removed (S817). Immediately after the discharge to the reaction vessel 105 (S816), the liquid in the reaction vessel 105 may be aspirated and discharged into the tip to be stirred.

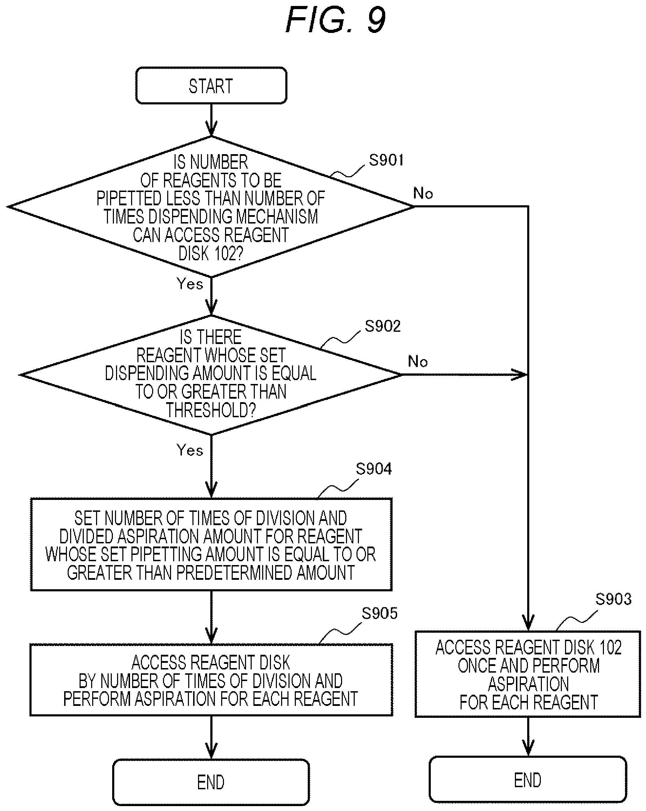

FIG. 9 is a flowchart in which an algorithm for changing the number of times of access is generalized. In FIG. 8, in a case where the pipetting mechanism 111 can access the reagent up to two times and aspirates only one type of reagent, the number of times of access to the reagent is changed according to the set pipetting amount. The present invention is not limited thereto, and if the number of times the pipetting mechanism can access the liquid is larger than the number of types of liquids, the same effect can be exerted. This point can be generalized as in FIG. 9.

The number of times of access is determined according to two conditions: whether or not the number of reagents to be pipetted is less than the number of times the pipetting mechanism can access the reagent disk 102 (S901); and whether or not there is a reagent whose set pipetting amount is equal to or greater than the threshold (S902). For example, if the pipetting mechanism pipettes three types of reagents and the pipetting mechanism can access the reagents up to four times, the process proceeds to S902.

In a case where the number of reagents to be pipetted is not less than the number of times the pipetting mechanism can access the reagent disk 102, there is no timing at which the same reagent can be accessed twice or more. Therefore, for each reagent, access to the reagent disk 102 is made once and aspiration is performed (S903).

In a case where there is no reagent whose set pipetting amount is equal to or greater than the threshold, it is possible to ensure a sufficient time for aspiration with one access to each reagent. Therefore, it is not necessary to access the same reagent twice or more, and access to the reagent disk 102 is made once and aspiration is performed for each reagent (S903).

In a case where the number of reagents to be pipetted is less than the number of times the pipetting mechanism can access the reagent disk 102 and there is a reagent whose set pipetting amount is equal to or greater than the threshold, it is possible to access the same reagent twice or more, and it is possible to improve pipetting accuracy by accessing the same reagent twice or more and performing aspiration dividedly. Therefore, the number of times of division and the divided aspiration amount are set for the reagent whose set pipetting amount is equal to or greater than the threshold (S904), and access to the reagent disk is made and aspiration is performed for each reagent by the number of times of division (S905). If the number of times the pipetting mechanism can access the reagent disk is sufficiently large, aspiration may be dividedly performed in three or more times. As a method of setting the aspiration amount in each access in a case where aspiration is dividedly performed, setting is performed in such a way that the aspiration amounts in the respective accesses are equal, setting is performed in such a way that a certain amount (for example, 100 microliters) of reagent is aspirated at the time of the first aspiration and the remaining amount of reagent is aspirated at the time of the second aspiration, distribution is performed in proportion to a time during which aspiration can be performed in each access, and the like.

In the first embodiment, in a case where the set reagent pipetting amount is large, the pipetting mechanism is caused to access the reagent disk a plurality of times, so that a time required for aspiration can be ensured and the pipetting accuracy can be improved. Specifically, in the first embodiment, a variation in pipetting amount can be reduced by 60% by dividedly performing aspiration. The first embodiment is particularly effective in a case where a time for one access to the reagent cannot be extended because there are a plurality of pipetting mechanisms. In particular, in a case where there are a plurality of pipetting mechanisms and the plurality of pipetting mechanisms analyze independent items, extending a time for access to one pipetting mechanism may reduce an analysis throughput of the other pipetting mechanism, and thus the access time cannot be extended. The first embodiment is effective in such a case.

In the first embodiment, the aspiration time is extended by changing the number of times of access, and thus, there is an advantage that there is no need to increase the output of the probe drive unit or the syringe drive unit and application to a low-output drive mechanism is possible. For example, in the configuration of the first embodiment, in a case where 100 microliters of liquid is aspirated in one access, a flow rate of the syringe 203 is 300 microliters per second. It is sufficient to adopt the syringe 203 capable of being driven to aspirate up to 300 microliters per second by dividedly performing aspiration in a case of 100 microliters or more. In a case where aspiration is not dividedly performed, the syringe 203 whose throughput is 300 microliters per second or more is required when aspirating 100 microliters or more. As described above, the first embodiment has an advantage that a low-flow-rate syringe can be adopted.

In the first embodiment, since an available access timing for the reagent disk is utilized, there is an advantage that a throughput loss does not occur. As described above, the analysis performance can be enhanced while maintaining the throughput and hardware configuration of the device.

The reagent in the first embodiment is not necessarily a reagent that reacts with the sample in the reaction vessel for detection, and may be a dilution reagent for diluting the sample, a pretreatment reagent for cleaning or extracting the sample before analysis, a calibration reagent for calibrating the device, a cleaning reagent for cleaning the device, or the like. In any case, when the number of reagents to be pipetted is less than the number of times the pipetting mechanism can access the reagent disk 102 and there is a reagent whose set pipetting amount is equal to or greater than the threshold, it is possible to improve the pipetting accuracy by dividedly aspirating the reagent in a plurality of times.

### <Second Embodiment>

In a second embodiment of the present invention, an example in which a liquid to be pipetted is aspirated by a probe without using the tip 113 in the first embodiment will be described. Hereinafter, differences from the first embodiment will be mainly described.

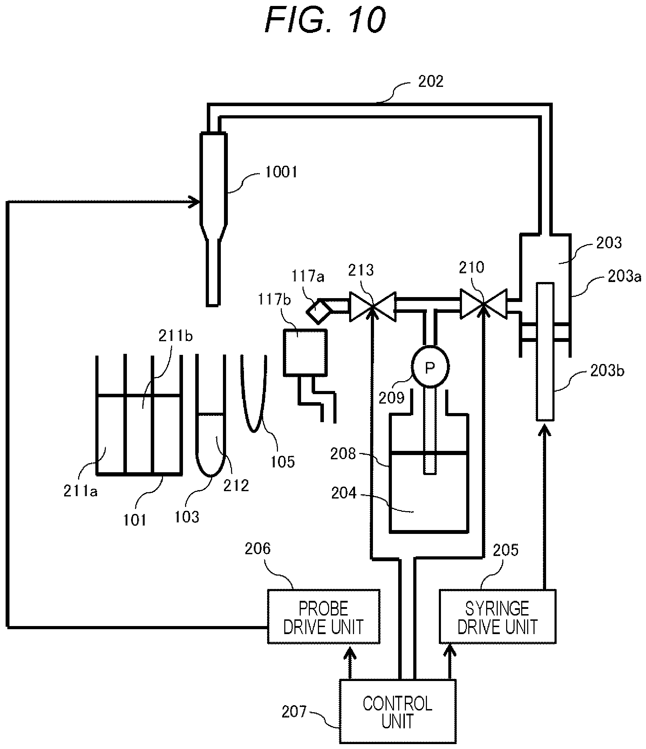

FIG. 10 is a schematic configuration diagram of a pipetting mechanism included in an automatic analysis device 1 according to the second embodiment. In the pipetting mechanism of FIG. 2, the probe 201 is used to mount the tip 113, whereas in the pipetting mechanism of FIG. 10, a probe 1001 for directly aspirating a liquid to be pipetted is used. Since the pipetting mechanism illustrated in FIG. 10 does not use the tip 113, the tip 113, the tip buffer 114, and the tip disposal port 116 are not necessary. In FIG. 10, the probe 1001 is directly immersed in reagents 211a and 211b and a sample 212 and performs aspiration.

In FIG. 2, the cleaning nozzle 117a cleans the outer wall of the tip 113. On the other hand, in FIG. 10, a cleaning nozzle 117a cleans an outer wall of the probe 1001. This is because, in FIG. 10, the probe 1001 is directly immersed in the reagents 211a and 211b and the sample 212, and thus these liquids are attached to the outer wall of the probe 1001.

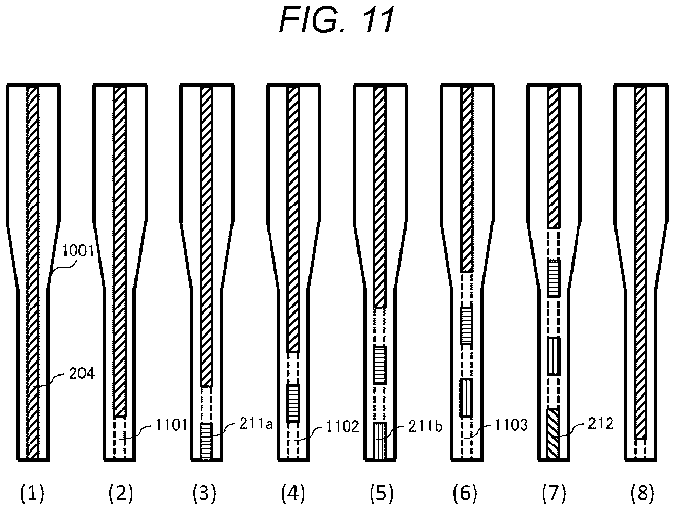

FIG. 11 illustrates a state of flow in the probe 1001 in an aspiration/discharge operation when two types of reagents and one type of sample are simultaneously pipetted in the second embodiment. The maximum number of types of liquids that can be pipetted is three in the second embodiment. Unlike FIG. 3, in FIG. 11, the reagents 211a and 211b and the sample 212 are aspirated directly into the probe.

First, the inside of the probe 1001 is filled with cleaning water 204 (FIG. 11(1)). Subsequently, a syringe 203 is driven to aspirate segmented air 1101 into the probe (FIG. 11(2)), and then the probe 1001 is immersed in the reagent 211a. After the immersion, the syringe 203 is driven to aspirate the reagent 211a into the probe 1001 (FIG. 11(3)). At the time of aspiration, the reagent 211a is attached to the outer wall of the probe 1001. By accessing a cleaning tank 117 and discharging the cleaning water 204 from a cleaning nozzle 117a to the outer wall of the probe 1001, the reagent 211a attached to the outer wall of the probe 1001 is cleaned away. Before or after the cleaning, the syringe 203 is driven to aspirate segmented air 1102 into the probe, thereby preventing dripping of the reagent 211a (FIG. 11(4)).

Subsequently, the probe 1001 is driven to immerse the probe 1001 in the reagent 211b. After the immersion, the syringe 203 is driven to aspirate the reagent 211b into the probe 1001 (FIG. 11(5)). At the time of aspiration, the reagent 211b is attached to the outer wall of the probe 1001. By accessing the cleaning tank 117 and discharging the cleaning water 204 from the cleaning nozzle 117a to the outer wall of the probe 1001, the reagent 211b attached to the outer wall of the probe 1001 is cleaned away. Before or after the cleaning, the syringe 203 is driven to aspirate segmented air 1103 into the probe, thereby preventing dripping of the reagent 211b (FIG. 11(6)).

Finally, the probe 1001 is driven to immerse the probe 1001 in the sample 212. After the immersion, the syringe 203 is driven to aspirate the sample 212 into the probe 1001 (FIG. 11(7)). Since all the liquids to be pipetted have been aspirated by the processes so far, the probe 201 is driven to access a reaction vessel 105 and discharge all the liquids (FIG. 11(8)).

The operation procedure in the second embodiment is modified as follows with respect to FIG. 4. Since the tip 113 is not used, the mounting of the tip 113 (S403) and the removal of the tip 113 (S414) are not performed. In the second embodiment, instead of the tip 113, the probe 1001 is immersed in the reagents 211a and 211b and the sample 212, and the probe 1001 is cleaned instead of the tip 113. The segmented air 301, segmented air 302, and segmented air 303 are changed to the segmented air 1101, segmented air 1102, and segmented air 1103, respectively.

A time chart illustrating timings of operations of a pipetting mechanism 111 and a pipetting mechanism 112 and timings of operations of a reagent disk 102, a sample disk 104, and an incubator 106 that are related to the pipetting mechanism 111 and the pipetting mechanism 112 in the second embodiment is equivalent to that in FIG. 5.

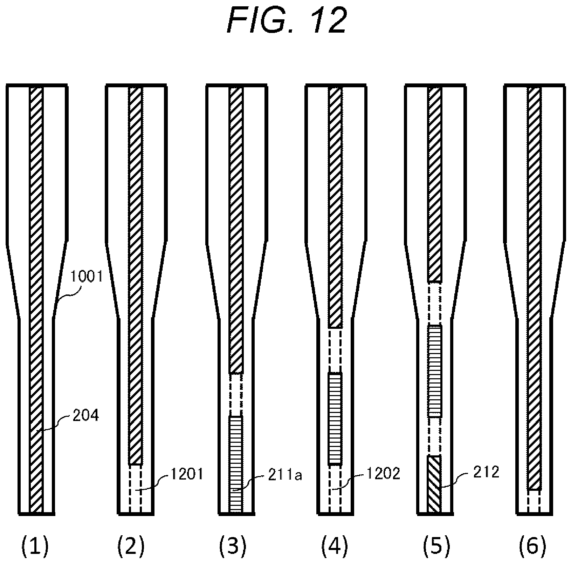

FIG. 12 illustrates a state of flow in the probe 1001 in an aspiration/discharge operation when one type of reagent and one type of sample are simultaneously pipetted. FIG. 12 corresponds to FIG. 6. First, the inside of the probe 1001 is filled with the cleaning water 204 (FIG. 12(1)). Subsequently, the syringe 203 is driven to aspirate the segmented air 1201 into the probe (FIG. 12(2)).

The probe 1001 is driven to immerse the probe 1001 in the reagent 211a. After the immersion, the syringe 203 is driven to aspirate the reagent 211a into the probe 1001 (FIG. 12(3)). Subsequently, by accessing the cleaning tank 117 and discharging the cleaning water 204 from the cleaning nozzle 117a to the outer wall of the probe 1001, the reagent 211a attached to the outer wall of the probe 1001 is cleaned away. Before or after the cleaning, the syringe 203 is driven to aspirate segmented air 1202 into the probe, thereby preventing dripping of the reagent 211a (FIG. 12(4)).

Since the reagent 211b is not used, the reagent 211b is not accessed and the sample 212 is accessed. The probe 1001 is driven to immerse the probe 1001 in the sample 212. After the immersion, the probe 1001 is driven to aspirate the sample 212 into the probe 1001 (FIG. 12(5)). Since all the liquids to be pipetted have been aspirated by the processes so far, the probe 1001 is driven to access the reaction vessel 105 and discharge all the liquids (FIG. 12(6)).

Also in the second embodiment, since the pipetting mechanism can access the reagent disk 102 up to two times, the access to the reagent 211a can be made two times, and the set aspiration amount of reagent 211a can be dividedly aspirated in two times. In a case where the set aspiration amount is large, it is possible to improve pipetting accuracy by performing the access in twice to secure an aspiration time.

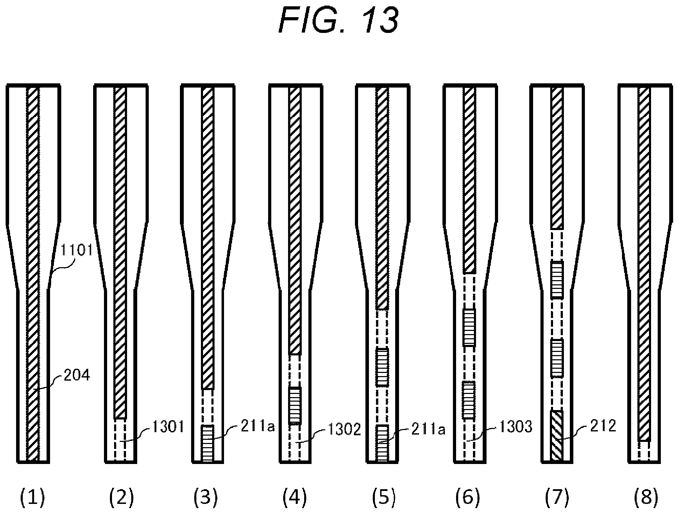

FIG. 13 illustrates a state of flow in the probe 1001 in an aspiration/discharge operation in a case where access to a reagent is performed twice when one reagent and one sample are simultaneously pipetted. FIG. 13 corresponds to FIG. 7. First, the inside of the probe 1001 is filled with the cleaning water 204 (FIG. 13(1)). Subsequently, the syringe 203 is driven to aspirate segmented air 1301 into the probe (FIG. 13(2)).

The probe 1001 is driven to immerse the probe 1001 in the reagent 211a. After the immersion, the syringe 203 is driven to aspirate the reagent 211a into the probe 1001 (FIG. 13(3)). Subsequently, access to the cleaning tank 117 is made to clean the outer wall of the probe 1001. Then, the syringe 203 is driven to aspirate segmented air 1302 into the probe, thereby preventing dripping of the reagent 211a (FIG. 13(4)). Since the liquid attached to the outer wall of the probe 1001 at the time of aspiration is the reagent 211a and the liquid to be accessed next is also the reagent 211a, cleaning using the cleaning tank 117 does not have to be performed at this time.

Subsequently, the reagent 211a is accessed again. The probe 1001 is driven to immerse the probe 1001 in the reagent 211a. After the immersion, the syringe 203 is driven to aspirate the reagent 211a into the probe 1001 (FIG. 13(5)). Subsequently, access to the cleaning tank 117 is made to clean the outer wall of the probe 1001. Then, the syringe 203 is driven to aspirate segmented air 1303 into the probe, thereby preventing dripping of the reagent 211a (FIG. 13(6)).

Finally, the probe 1001 is driven to immerse the probe 1001 in the sample 212. After the immersion, the syringe 203 is driven to aspirate the sample 212 into the probe 1001 (FIG. 13(7)). Since all the liquids to be pipetted have been aspirated by the processes so far, the probe 1001 is driven to access the reaction vessel 105 and discharge all the liquids (FIG. 13(8)).

Also in the second embodiment, similarly to the first embodiment, when one type of reagent and one type of sample are simultaneously pipetted, the same reagent is accessed twice and dividedly aspirated in a case where the set pipetting amount is equal to or greater than a threshold. On the other hand, in a case where the set aspiration amount is or less than the threshold, the set amount of liquid is aspirated by one access.

A flowchart illustrating an operation procedure of the pipetting mechanism when one type of reagent and one type of sample are simultaneously pipetted is changed as follows in FIG. 8. Since the tip 113 is not used, the mounting of the tip 113 (S803) and the removal of the tip 113 (S817) are not performed. In the second embodiment, instead of the tip 113, the probe 1001 is immersed in the reagent 211a and the sample 212, and the probe 1001 is cleaned instead of the tip 113.

A flowchart in which the algorithm for changing the number of accesses is generalized is equivalent to that in FIG. 9.

The effects of the invention in the second embodiment are equivalent to those of the first embodiment, and modified examples similar to the first embodiment can be considered.

### <Third Embodiment>

In the first and second embodiments, a method in which when the number of reagents to be pipetted is less than the number of times of access the pipetting mechanism can access the reagent disk and there is a reagent whose set pipetting amount is equal to or greater than the threshold, the same reagent is accessed a plurality of times and dividedly aspirated, thereby improving the pipetting accuracy for the reagent. This is effective when the reagent disk can be accessed a plurality of times. On the other hand, in a case of a device configuration in which the sample disk can be accessed a plurality of times, when the set pipetting amount of the sample is equal to or greater than the threshold, the same sample can be accessed a plurality of times and dividedly aspirated, thereby improving the pipetting accuracy for the sample.

In a third embodiment of the present invention, an example in which the sample disk can be accessed a plurality of times and one reagent and one sample are aspirated in the configuration of the first embodiment will be described. Hereinafter, differences from the first embodiment will be mainly described.

A configuration of an analysis device and a configuration of a pipetting mechanism according to the third embodiment are the same as those in FIGS. 1 and 2. In the first embodiment, the reagent disk 102 can be accessed up to two times. Therefore, in a case where only one type of reagent is pipetted, the reagent 211a is aspirated in twice when the pipetted amount is large as illustrated in FIG. 8. In the third embodiment, a sample disk 104 can be accessed up to two times, and a sample 212 is aspirated in twice in a case where the set pipetting amount of the sample 212 is large.

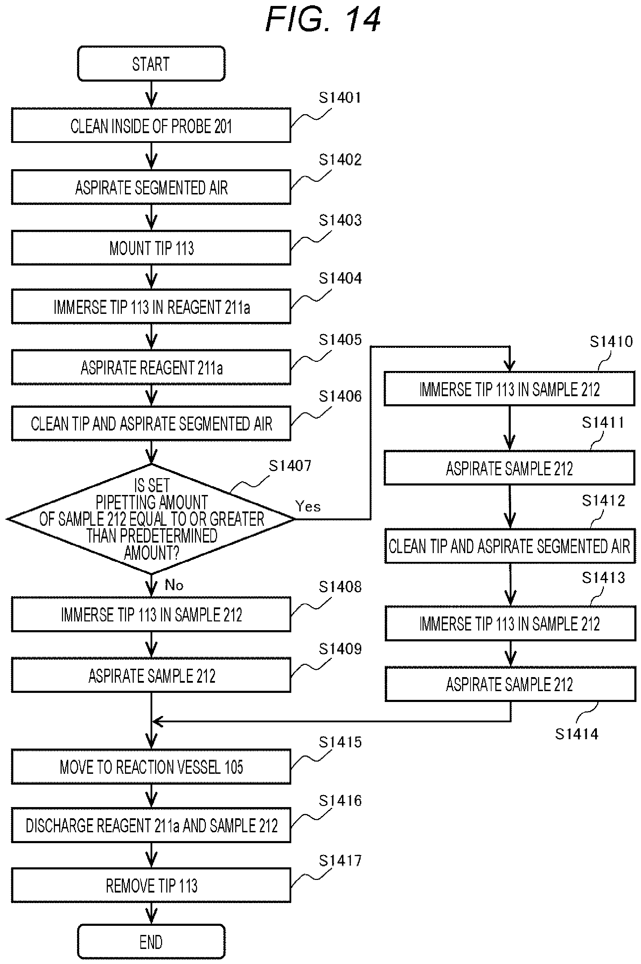

FIG. 14 is a flowchart illustrating an operation procedure of a pipetting mechanism 111 when one type of reagent and one type of sample are simultaneously pipetted. First, cleaning water 204 is caused to flow into a probe 201 to clean the inside of the probe 201 (S1401). Segmented air is aspirated into the probe 201 (S1402), and a tip 113 is attached to a distal end of the probe 201 (S1403).

First, a reagent 211a is accessed. The tip 113 is immersed in the reagent 211a (S1404), and the reagent 211a is aspirated into the tip 113 (S1405). Thereafter, access to a cleaning tank 117 is made, and cleaning of the tip 113 and aspiration of the segmented air are performed (S1406).

The number of times of access to the sample 212 is changed according to whether or not the set pipetting amount of the sample 212 is equal to or greater than a threshold (S1407). In a case where the set pipetting amount of the sample 212 is less than the threshold, the number of times of access to the sample 212 is set to one time, and as the probe 201 is driven, the tip 113 is immersed in the sample 212 (S1408), and the sample 212 is aspirated into the tip 113 (S1409). In a case where the set pipetting amount of the sample 212 is equal to or greater than the threshold, the number of times of access to the sample 212 is set to two times, the tip 113 is immersed in the sample 212 (S1410), and the sample 212 is aspirated into the tip 113 (S1411). Thereafter, access to the cleaning tank 117 is made, and cleaning of the tip 113 and aspiration of the segmented air are performed (S1412). The tip 113 is immersed in the sample 212 again (S1413), and the sample 212 is aspirated into the tip 113 (S1414).

Finally, access to the incubator 106 is made to discharge the aspirated liquid. The probe 201 is moved to the reaction vessel 105 (S1415), and the reagent 211a and the sample 212 are discharged into the reaction vessel 105 (S1416). The probe is moved to the tip disposal port 116, and the tip 113 is removed (S1417). Immediately after the discharge to the reaction vessel 105 (S1416), the liquid in the reaction vessel 105 may be aspirated and discharged into the tip to be stirred.

In the third embodiment, in a case where the set sample pipetting amount is large, the pipetting mechanism is caused to access the sample disk a plurality of times, so that a time required for aspiration can be ensured and the pipetting accuracy can be improved. The third embodiment is particularly effective in a case where a time for one access to the sample cannot be extended because there are a plurality of pipetting mechanisms. Further, the aspiration time is secured by only changing the number of times of access, and thus, there is an advantage that there is no need to increase the output of a probe drive unit or a syringe drive unit and application to a low-output drive mechanism is possible. In addition, in the third embodiment, since an available access timing for the sample disk is utilized, there is an advantage that a throughput loss does not occur. As described above, the analysis performance can be enhanced while maintaining the throughput and hardware configuration of the device.

The sample in the third embodiment may be a sample diluted in the automatic analysis device 1. Further, the third embodiment may be applied to a configuration in which a liquid is directly aspirated by a probe without using a tip as in the second embodiment. In any case, when the sample can be accessed a plurality of times and there is a sample whose set pipetting amount is equal to or greater than the threshold, the pipetting accuracy can be improved by dividedly pipetting the sample in a plurality of times.

### <Modified Examples of Present Invention>

The present invention is not limited to the embodiments described above, but includes various modified examples. For example, the above-described embodiments have been described in detail in order to explain the present invention in an easy-to-understand manner, and the present invention is not necessarily limited to those having all the configurations described. Further, a part of a configuration of an embodiment can be replaced with a configuration of another embodiment, and to a configuration of an embodiment, a configuration of another embodiment can be added. In addition, a part of the configuration of each embodiment can be added with another configuration, can be deleted, and can be replaced with another configuration.

In FIG. 5, it has been described that while one pipetting mechanism performs cleaning or aspiration of segmented air, the other pipetting mechanism aspirates a reagent (or a sample). This is because a time during which one pipetting mechanism performs cleaning or aspiration of segmented air is an idle time for the other pipetting mechanism, the reagent disk, the sample disk, and the incubator, and thus the throughput is ensured by efficiently using the idle time. Since the same idle time may occur even in a case other than cleaning and segmented air aspiration, a liquid may be aspirated using such an idle time. For example, while one pipetting mechanism aspirates a first type of liquid (for example, the sample), the other pipetting mechanism may aspirate a second type of liquid (for example, the reagent). Alternatively, while one pipetting mechanism discharges a liquid, the other pipetting mechanism may aspirate the liquid.

In the above-described embodiment, in a case where a disposable tip is attached to the distal end of the probe, the tip and the probe integrally aspirate a liquid. Therefore, a structure in which the probe 1001 and the tip are integrated may be regarded as the probe in the present invention. The present invention can be applied to aspirate a liquid into the inside of the structure.

In the above-described embodiment, it has been described that the number of aspiration is changed according to the pipetting amount. Specifically, the number of aspiration is changed according to whether or not the pipetting amount has reached a threshold. In a case where the pipetting amount is equal to the threshold, any number of aspiration may be used. That is, the number of aspiration may or does not have to be increased.

In the above-described embodiment, in a case where a liquid is continuously aspirated before an aspirated liquid is discharged into the probe or the tip, the segmented air is arranged between the aspirated liquids, so that stirring is efficiently performed. The present invention is also useful from that viewpoint. For this reason, in a case where a reagent or sample that is difficult to stir is used for analysis, a modified example in which segmented air is aspirated by dividedly aspirating the reagent or sample to improve efficiency in stirring is also effective. That is, the number of aspiration into the probe may be changed according to the type of liquid to be pipetted by the probe. Alternatively, from the viewpoint of a pipetting amount ratio of a sample or a reagent used for analysis (a volume ratio of each liquid pipetted to the reaction vessel), a modified example, in which when it is determined that stirring is difficult, the reagent or the sample is dividedly aspirated to aspirate segmented air, thereby improving efficiency in stirring, is also effective. Therefore, in place of or in combination with the step (S804) of comparing the liquid pipetting amount with the threshold described with reference to FIG. 8, (a) the process may proceed to Yes in a case of pipetting a type of liquid assumed to be difficult to stir in S804, and (b) the process may proceed to Yes in a case of pipetting respective liquids at the pipetting amount ratio determined to be difficult to stir in S804.

In the above-described embodiment, an example in which the automatic analysis device 1 includes two pipetting mechanisms has been described, but the present invention can also be applied to a case where the automatic analysis device 1 includes three or more pipetting mechanisms. That is, if the number of aspiration for the same liquid can be increased by aspirating the liquid by any pipetting mechanism while another pipetting mechanism performs an operation other than liquid aspiration, the same effects as those of the above-described embodiment can be exhibited.

In the above-described embodiment, an example in which both the pipetting mechanism and the disk move to the pipetting position has been described, but the present invention can be applied even in a case where only one of the pipetting mechanism and the disk moves to the pipetting position. That is, if the number of aspiration for the same liquid can be increased by aspirating the liquid by any pipetting mechanism while another pipetting mechanism performs an operation other than liquid aspiration, the same effects as those of the above-described embodiment can be exhibited.

In the above-described embodiment, in a case where a plurality of types of reagents are simultaneously held in the probe, the reagents contained in different reagent containers are aspirated, and in a case where one type of reagent is repeatedly aspirated, the reagent contained in the same reagent container is repeatedly aspirated. Alternatively, in a case where one type of reagent is repeatedly aspirated, different reagent containers may contain the same reagent, and one type of reagent may be repeatedly aspirated by sequentially accessing the different reagent containers. Similarly, in a case of aspirating the sample into the probe, the samples contained in different sample containers may be simultaneously held in the probe, or the sample contained in the same sample container may be repeatedly aspirated.

### Reference Signs List

1 automatic analysis device
101 reagent bottle
102 reagent disk
102a movement mechanism
103 sample container
104 sample disk
104a movement mechanism
105 reaction vessel
106 incubator
106a movement mechanism
107 reaction vessel tray
108 gripper
109 detection unit
110 reaction vessel disposal port
111 pipetting mechanism
112 pipetting mechanism
113 tip
114 tip buffer
115 tip tray
116 tip disposal port
117 cleaning tank
117a cleaning nozzle
117b drain cup
118 cleaning tank
201 probe
202 tube
203 syringe
203a cylinder
203b plunger
204 cleaning water
205 syringe drive unit
206 probe drive unit
207 control unit
208 cleaning water tank
209 pump
210 electromagnetic valve
211a reagent
211b reagent
212 sample
213 electromagnetic valve
1001 probe

## Claims

1. An automatic analysis device for analyzing a target substance included in a sample, the automatic analysis device comprising:
a detection unit that analyzes the sample; and
a probe that pipettes a liquid, wherein
the liquid is the sample or a reagent used to analyze the sample, and
the probe changes the number of aspiration by which the liquid is aspirated into the probe according to a pipetting amount by which the probe pipettes the liquid.

2. The automatic analysis device according to claim 1, wherein in a case where the number of aspiration is plural, the probe further aspirates the liquid before discharging the aspirated liquid after aspirating the liquid.

3. The automatic analysis device according to claim 2, wherein in a case where the pipetting amount is equal to or greater than a threshold, the probe increases the number of aspiration to be larger than that in a case where the pipetting amount is less than the threshold.

4. The automatic analysis device according to any one of claims 1 to 3, further comprising a movement mechanism that moves the probe or a placement unit on which a container containing the liquid is placed to a pipetting position where the liquid is pipettable to the container, wherein
the movement mechanism changes a number of times of movement by which the probe or the placement unit is moved to the pipetting position according to the pipetting amount.

5. The automatic analysis device according to claim 4, wherein
a first pipetting probe and a second pipetting probe are included as the probes,
the first pipetting probe pipettes the liquid at a first pipetting position,
the second pipetting probe pipettes the liquid contained in a container different from the container containing the liquid pipetted by the first pipetting probe at a second pipetting position, and
the movement mechanism moves the second pipetting probe or the placement unit to the second pipetting position after the first pipetting probe aspirates the liquid at the first pipetting position.

6. The automatic analysis device according to claim 4, wherein
a first pipetting probe and a second pipetting probe are included as the probes,
the first pipetting probe pipettes the liquid at a first pipetting position,
the second pipetting probe pipettes the liquid contained in a same container as the container containing the liquid pipetted by the first pipetting probe at a second pipetting position, and
the movement mechanism moves the second pipetting probe or the placement unit to the second pipetting position after the first pipetting probe aspirates the liquid at the first pipetting position.

7. The automatic analysis device according to claim 5 or 6, wherein the first pipetting probe further aspirates the liquid after the first pipetting probe aspirates the liquid in a case where the pipetting amount is equal to or greater than the threshold.

8. The automatic analysis device according to claim 1, wherein
the probe pipettes a first liquid and a second liquid as the liquid, and
the probe further aspirates the second liquid after aspirating the first liquid, and before discharging the first liquid to simultaneously hold the first liquid and the second liquid inside the probe.

9. The automatic analysis device according to claim 8, wherein the first liquid and the second liquid are reagents contained in one container or reagents contained in different containers.

10. The automatic analysis device according to claim 8, wherein the first liquid and the second liquid are samples contained in one container or samples contained in different containers.

11. The automatic analysis device according to claim 5, wherein
the first pipetting probe pipettes a first liquid and a second liquid as the liquid, and
the first pipetting probe aspirates segmented air after aspirating the first liquid and before discharging the first liquid, and further aspirates the second liquid to simultaneously hold the first liquid and the second liquid inside the probe.

12. An automatic analysis device for analyzing a target substance included in a sample, the automatic analysis device comprising:
a detection unit that analyzes the sample; and
a probe that pipettes a liquid, wherein
the liquid is the sample or a reagent used to analyze the sample, and
the probe changes a number of aspiration by which the liquid is aspirated into the probe according to a type of the liquid.

13. An automatic analysis device for analyzing a target substance included in a sample, the automatic analysis device comprising:
a detection unit that analyzes the sample; and
a probe that pipettes a plurality of types of liquids, wherein
the liquid is the sample or a reagent used to analyze the sample, and
the probe changes the number of aspiration by which the liquid is aspirated into the probe according to a pipetting amount ratio of the liquids.

14. The automatic analysis device according to any one of claims 1 to 13, wherein
the probe is configured in such a way that a disposable pipetting tip is attachable to and detachable from a distal end of the probe, and
the probe aspirates the liquid into the pipetting tip in a state where the pipetting tip is mounted on the distal end of the probe.
